Europäisches Patentamt

European Patent Office

Office européen des brevets

(19)

(11) EP 1 047 208 A1

(12) EUROPEAN PATENT APPLICATION

(43) Date of publication:
25.10.2000 Bulletin 2000/43

(51) Int Cl.7: H04B 7/005

(21) Application number: 99440083.6

(22) Date of filing: 20.04.1999

(84) Designated Contracting States:
AT BE CH CY DE DK ES FI FR GB GR IE IT LI LU
MC NL PT SE
Designated Extension States:
AL LT LV MK RO SI

(71) Applicant: ALCATEL
75008 Paris (FR)

(72) Inventor: Buné, Paul A.M.
70806 Kornwestheim (DE)

(74) Representative: Rausch, Gabriele, Dr. et al
Alcatel
Intellectual Property Department, Stuttgart
Postfach 30 09 29
70449 Stuttgart (DE)

(54) Transmission power control in a CDMA system

(57) A method is disclosed for supporting the control of the transmitted power of a radio signal transmitted between at least one base station and at least one mobile unit using digital CDMA techniques. The information on the instantaneous transmitter power is transmitted over the radio channel.

Fig. 1

EP 1 047 208 A1

**Description**

This invention relates to a transmitter for digital CDMA radio signals and to a method of controlling the transmitted power of such signals as set forth in the generic parts of the respective independent claims.

If digital CDMA techniques are used, transmit power control is necessary to optimize communications and link as many communications units as possible. In a CDMA transmission system, all intercommunicating units transmit simultaneously. For example, all mobile units which are in communication with a base station transmit their signals simultaneously, but modulated with different codes. At the base station, the signals are decoded and can be assigned to the individual mobile units. All the other transmitted signals form a background signal, i.e., an interference signal. It is obvious that adaptation of the transmitted powers of the individual mobile units linked with a base station is necessary in order to be able to decode and distinguish the individual signals. When a mobile unit transmits with excessive power, it "drowns out" all other transmitters linked with the base station. The different output powers of the mobile units depend on the distances of the units from the base station and on further attenuating effects, such as Doppler effects and Rayleigh fading. To adapt the transmitters to different conditions in the transmission channel, the receiving base stating attempts to optimize the output powers of the individual mobile units linked with it by using so-called TPC commands (TPC = Transmit Power Control).

These control methods are known, for example, from A. Viterbi, "CDMA: Principles of Spread Spectrum Communication", Addison-Wesley, 1998, page 182 et seq. Open-loop or closed-loop power control mechanisms are used. With a CDMA power control loop, the input power of a mobile unit is analyzed on the basis of the quantities measured at the input of the receiver, such as input signal power and interference power. The input signal power is composed of the transmitted power of the mobile unit and the channel loss on the transmission link. At the receiver, it is not readily possible to calculate or measure the contributions of the individual components to the total input signal power.

The method according to the invention has the advantage that information about the transmitter power is transmitted in digital form. This makes it possible to separate the two components, namely the output power of the transmitter and channel effects, at the receiver. This permits improved power control, since the contributions of the individual components are not merely estimated but are available in the receiver as an absolute number. Through the presence of this accurate value, further development of CDMA transmit power control algorithms is possible. Such algorithms improve the performance of the transmitter power control, particularly under macrodiversity conditions.

One embodiment of the invention is illustrated in the accompanying drawings and will now be explained in more detail. In the drawings:

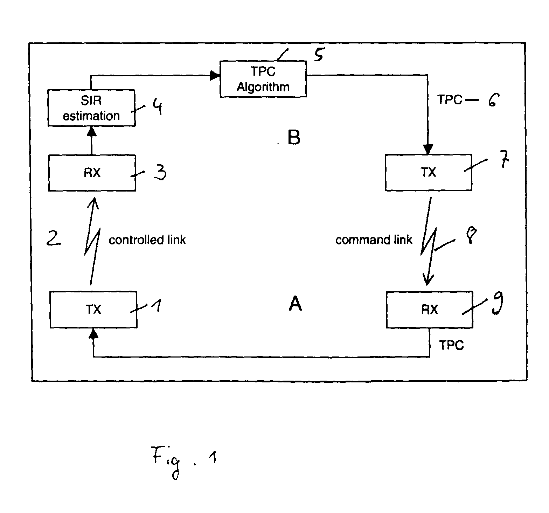

Fig. 1    shows two units A and B, each of which may be a base station or a mobile unit; and

Fig. 2    shows a transmitter unit with a device for determining the transmitter power.

In the embodiment it is assumed that unit A represents a mobile unit, and unit B a base station. The transmitter 1 of the mobile unit sends its data over the channel 2 to the receiver 3 of the base station. The receiver 3 in the base station is connected to a means 4 for estimating the signal-to-interference ratio. The output of means 4 is coupled to an arithmetic unit 5, which, in turn, is connected to a transmitter 7. The transmitter 7 sends control commands over a data channel 8 to the receiver 9 of the mobile unit.

The mobile unit A transmits its data to the base station B over the channel 2, which represents a controlled link to the base station. In the base station B, the received data are demodulated and decoded and fed to a device which determines the signal-to-interference ratio for the incoming signal. This value SIR is measured at a high sampling rate. It is compared in the arithmetic unit 5 with an SIR target value. Using specific algorithms, the arithmetic unit 5 generates transmit power control (TPC) commands 6, which are sent by the transmitter 7 of the base station to the mobile unit A. In the receiving unit A, the TPC commands 6 cause an adaptation of the output power. At a given sampling instant i, the measured transmitter power of the mobile unit A is $STX_i$ and the measured power at the receiver 3 of the base station is $SRX_i$. The absolute loss in the channel 2 is defined as

$$ACL_i = STX_i \, / \, SRX_i.$$

The interference-to-noise power at the receiver at the same instant i is $IRX_i$. The dimensionless SIR value is then given by

$$SIR_i = SRX_i \, / \, IRX_i.$$

To ensure optimum and fast adaptation of the transmitted power of the mobile station to the changes in channel 2, it is necessary that information about the dynamic behavior of the channel, and thus of the channel loss ACL, is available in real time. "Real time" as used herein also means that control is to be effected on a time slot - by - time slot basis. In the CDMA receiver 3 in the base station, the value of the signal SRX is measured in each time slot. If the transmitted value STX for the same time slot is known, the receiver can determine the channel loss directly from

$$ACL = STX / SRX.$$

To transmit the absolute value of the transmitter, different variants are conceivable. In one variant, the information is transmitted via the instantaneous transmitter power STX in each time slot. Additional information bits are necessary to transfer the value to the receiver. The number of information bits depends on the transmitter power range and on its granularity. If, for example, a transmitter power range of 80 dB is to be transmitted with steps of 1 dB, then $(^2\log 80 + 1) = 7$ bits are needed.

In another embodiment, the absolute transmitter power STX is transmitted only once every n time slots, i.e., once every tenth of a second. In the intermediate time slots, the difference ΔSTX between one time slot and its preceding time slot is transmitted. The number of bits required to transmit a ΔSTX again depends of the bandwidth of the transmitter power and on the granularity. If, for example, a range of 1.5 dB is to be transmitted with a resolution of 0.25 dB, then, with an additional bit for the sign,

$$^2\log(1.5/0.25) + 2 = 4 \text{ bits}$$

are needed.

In a further embodiment, only the differences ΔSTX in signal power STX are transmitted from one time slot to another.

If the mobile unit is in communication with only one base station, and the difference in transmitter power ΔSTX is transmitted, the value of this difference is equal to the value of the TPC commands which are transmitted from the base station over the command link 8 to the mobile unit. If the mobile unit is in contact with several neighboring base stations at the same time ("macrodiversity"), the transmitted value ΔSTX is equivalent to the TPC command which has been selected in the mobile unit according to internal rules of the relevant standard. If the proposed power control is used in both directions, the STX and TPC commands are equivalent in each direction.

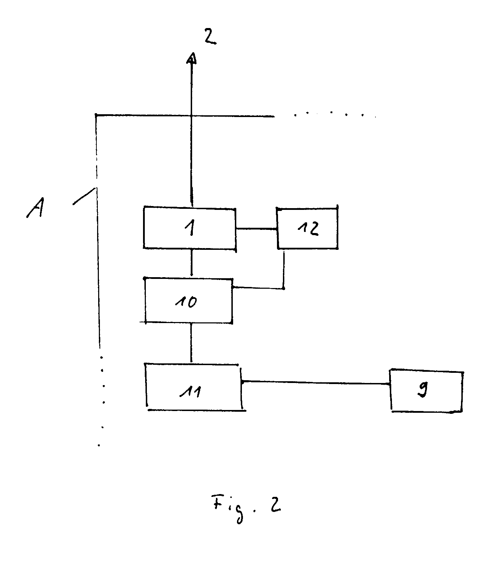

The proposed transmitter power control requires an estimated additional bandwidth of 10 % to 20 % in the pilot channels of the upstream and downstream channels. To be able to perform such a control, the transmitters and receivers must be tuned to the additional information. The air interface between units A and B must be adapted to the additional information. At the transmitting end, an additional determination of the instantaneous absolute transmitter power as shown in Fig. 2 may be necessary.

The TPC commands arriving at the transmitter are received by the receiver 9 of unit A. The receiver is connected to a central control unit 11 which processes incoming and outgoing data and has further input channels. The outgoing data are passed to a transmitting unit 10. The power of this transmitting unit is determined by a determining unit 12 connected to the transmitting unit. The power data determined by the determining unit 12 are passed to the transmitter 1, which integrates the information into the data flow in coded form. These real-time data are preferably transmitted over the pilot channel of the link. At the receiving end, now further modifications are necessary, since only a signal value determined at the transmitting end is processed in addition to a signal value estimated at receiving end. The receiver only needs to have the capability to process the additional information and feed it to the arithmetic unit 5 for analysis and further processing.

## Claims

1. A method of supporting the control of the transmitted power of a radio signal transmitted between at least one base station (B) and at least one mobile unit (A) using digital CDMA techniques, comprising the steps of measuring the power of the received radio signal and an interference signal in the receiver (3, 9) and subsequently processing the measured values as a signal-to-interference ratio (SIR), characterized in that information about the instantaneous power of the transmitter (1, 7) is transmitted over the radio channel.

2. A method as claimed in claim 1, characterized in that the transmitter power is transmitted as an absolute value in digital form.

3. A method as claimed in claim 1, characterized in that the transmitter power is transmitted as a relative value.

4. A method as claimed in claim 2 or 3, characterized in that the transmission contains the minimum number of data bits required for the absolute or relative value and for resolution.

5. A transmitter for digital CDMA radio signals with output power control and with a receiver for control signals which serve to adjust the output power, characterized in that the transmitter comprises means for the absolute determination of its output power and means for inserting this information as data bits into the data flow to be transmitted.

6. A transmitter as claimed in claim 5, characterized by being contained in a mobile unit or a base station.

Fig . 1

Fig. 2

**European Patent Office**

## EUROPEAN SEARCH REPORT

Application Number

EP 99 44 0083

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 682 417 A (NIPPON TELEGRAPH & TELEPHONE) 15 November 1995 (1995-11-15) * page 3, line 21 - line 49 * | 1,2,4-6 | H04B7/005 |
| Y | EP 0 579 372 A (NCR INT INC) 19 January 1994 (1994-01-19) * column 4, line 34 - line 53 * * abstract * | 1,2,4-6 | |
| | | | TECHNICAL FIELDS SEARCHED (Int.Cl.7) |
| | | | H04B |

The present search report has been drawn up for all claims

| Place of search | Date of completion of the search | Examiner |
|---|---|---|
| THE HAGUE | 29 September 1999 | Dionisi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 99 44 0083

This annex lists the patent family members relating to the patent documents cited in the above–mentioned European search report.
The members are as contained in the European Patent Office EDP file on
The European Patent Office is in no way liable for these particulars which are merely given for the purpose of information.

29–09–1999

| Patent document cited in search report | | Publication date | Patent family member(s) | | Publication date |
|---|---|---|---|---|---|
| EP 0682417 | A | 15–11–1995 | JP | 8032513 A | 02–02–1996 |
| | | | CA | 2149094 A,C | 13–11–1995 |
| | | | CN | 1117225 A,B | 21–02–1996 |
| | | | KR | 143836 B | 01–08–1998 |
| | | | US | 5604766 A | 18–02–1997 |
| EP 0579372 | A | 19–01–1994 | JP | 7283812 A | 27–10–1995 |
| | | | US | 5553316 A | 03–09–1996 |

EPO FORM P0459

For more details about this annex : see Official Journal of the European Patent Office, No. 12/82